# EUROPÄISCHE PATENTSCHRIFT

(11) **EP 0 696 429 B1**
(45) Veröffentlichungstag und Bekanntmachung des Hinweises auf die Patenterteilung: **12.11.1997**
(21) Anmeldenummer: 94112650.0
(22) Anmeldetag: 12.08.1994
(51) Int. Cl.: A47J 36/26, A47J 27/10

(54) **Elektrisch heizbares Wärmgerät**
Electrical warming device
Dispositif de réchauffage à électricité

(43) Veröffentlichungstag der Anmeldung: 14.02.1996
(73) Patentinhaber: David & Baader DBK Spezialfabrik elektrischer Apparate und Heizwiderstände GmbH, D-66870 Kandel/Pfalz (DE)
(72) Erfinder: Messmer, Robert, D-76870 Kandel (DE)
(74) Vertreter: Grünecker, Kinkeldey, Stockmair & Schwanhäusser Anwaltssozietät

(56) Entgegenhaltungen:
- CH-A- 444 417
- DE-U- 8 814 507
- FR-A- 1 513 453
- GB-A- 385 463
- GB-A- 2 025 206
- US-A- 2 691 717

## Beschreibung

Die vorliegende Erfindung betrifft ein elektrisch heizbares Wärmgerät zum Erwärmen von in einem Behälter befindlichen Substanzen gemäß dem Oberbegriff des Patentanspruchs 1. Ein derartiges Wärmgerät ist aus Dokument FR-A-1 813 453 bekannt.

Beim Betrieb solcher Wärmgeräte bestehen zwei Bedürnisse hinsichtlich des Erwärmungsvorgangs. Zum einen soll eine schnelle Aufheizung der zu erwärmenden Substanz auf die gewünschte Endtemperatur erfolgen und gleichzeitig soll die Endtemperatur in engen Temperaturgrenzen gehalten werden. Dies ist bei dem gattungsbildenden Wärmgerät schwierig, da die Erwärmung der Substanz über ein Wasserbad erfolgt und ein direktes Messen der Temperatur der zu erwärmenden Substanz in der Regel nicht möglich ist. Daher wird bei den herkömmlichen Geräten eine indirekte Temperaturmessung vorgenommen, wobei ein Meßfühler die Temperatur des Wasserbads mißt. Aus diesem gemessenen Wert leitet man in erster Linie den Temperaturwert für die zu erwärmende Substanz ab. Das Problem besteht darin, daß zumindest während des Aufheizens die Temperatur der zu erwärmenden Substanz derjenigen des Wasserbades "hinterherhinkt". Dies führt dazu, daß bei Erreichen einer bestimmten zulässigen Temperatur für das Wasserbad ein Regelelement die Heizung bereits abschaltet, obwohl die Temperatur der zu erwärmenden Substanz noch weit unter der Endtemperatur liegt. Erst nach dem Verstreichen einer Zeitdauer, in der ein Wärmeaustausch zwischen dem Wasserbad und der zu erwärmenden Substanz stattfindet, kühlt sich das Wasserbad soweit ab, daß der Regler die Heizung erneut einschaltet.

Von dieser Beschreibung des Aufheizvorgangs wird klar, daß bei einem herkömmlichen Wärmgerät erst nach verhältnismäßig langer Zeit die Endtemperatur in der zu erwärmenden Substanz erreicht wird.

Wenn man auf der anderen Seite ein Überschwingen der Temperatur des Wasserbades über die gewünschte Endtemperatur der zu erwärmenden Substanz zuläßt, erreicht man zwar eine schnellere Aufheizung, gleichzeitig ist aber dann die Schwankungsbreite der Endtemperatur relativ groß, woraus eine Ungenauigkeit der eingestellten Endtemperatur resultiert.

Folglich liegt der vorliegenden Erfindung die Aufgabe zugrunde, ein verlustarmes Wärmgerät anzugeben, welches eine schnelle Aufheizung auf eine in engen Toleranzgrenzen gehaltene Endtemperatur ermöglicht.

Diese Aufgabe wird erfindungsgemäß von einem Wärmgerät mit den Merkmalen des Patentanspruchs 1 gelöst.

Bei diesem Wärmgerät ist der Boden des Bechers, in dem sich das Wasserbad befindet, als eine metallische Wärmeplatte ausgebildet unter der wenigstens ein PTC-Heizelement angeordnet ist. Darüber hinaus ist ein Wärmeleitbügel seitlich an der Becherwand angeordnet und mit einem Thermostatschalter verbunden, welcher an einer Stelle nahe dem PTC-Heizelement angeordnet ist, so daß er sich im direkten Einflußbereich des Heizelementes befindet.

Durch den Ersatz einer herkömmlich verwendeten Widerstandsdrahtheizung durch ein selbstbegrenzendes PTC-Heizelement ergeben sich die bekannten Vorteile während des Aufheizens, nämlich eine hohe Anfangsleistung, wenn das Heizelement sich im kalten Zustand, d.h. Umgebungstemperatur befindet und ein selbstregelndes Leistungsverhalten mit zunehmender Temperatur. Durch die Anordnung des PTC-Heizelementes unter der metallischen Wärmeplatte wird eine hohe Wärmeübertragung auf die Wärmeplatte sowie eine ausgezeichnete Auskopplung der Wärme in das Wasserbad erreicht.

Weiterhin zeichnet sich die erfindungsgemäße Lösung dadurch aus, daß der Thermostatschalter, welcher das Ein- und Ausschalten des Heizelementes steuert, im Einflußbereich zweier physikalischer Größen steht. Einerseits ist er so angeordnet, daß er sich im direkten Einflußbereich des PTC-Heizelementes befindet, wodurch die abgegebene Wärmestrahlung unmittelbar auf den Thermostatschalter Einfluß nimmt und darüber hinaus erhält der Thermostatschalter eine Rückkopplung der Temperatur des Wasserbades über den seitlich an der Becherwand angeordneten Wärmeleitbügel. Die zweite Einflußgröße wird mit einer zeitlichen Verzögerung dem Thermostat zugeführt, welche dadurch entsteht, daß der Wärmeleitbügel nur diejenige Temperatur rückkoppeln kann, auf die er sich selbst erwärmt hat.

Zusammenfassend ist bei der erfindungsgemäßen Lösung hervorzuheben, daß dem Regler zwei Meßwert-Istsignale mit unterschiedlicher Gewichtung zugeführt werden, wodurch das vorteilhafte Betriebsverhalten des erfindungsgemäßen Wärmgeräts resultiert.

In einer einfach herzustellenden Ausführungsform der Erfindung besitzt das Wärmgerät ein Kunststoffgehäuse dessen Oberteil die seitlichen Wände des Bechers bildet. Bei dem herkömmlichen Wärmgerät erfolgt die Zuführung der Heizenergie durch die Seitenwände mittels dort vorgesehener Heizdrähte u.ä.. Diese Anordnung erfordert eine doppelwandige Ausbildung des Bechers, wobei die Außenwand der Wärmeisolation dient, damit möglichst viel Wärmeenergie durch die Innenwand dem Wasserbad im Becherinneren zugeführt wird. Ein einwandig ausgebildeter Becher ist zweifellos mit geringem Materialverbrauch einfach herstellbar.

Vorzugsweise sind an den seitlichen Wänden des Bechers radial nach innen vorstehende Rippen ausgebildet, die eine Länge von vorzugsweise einem Viertel des Durchmessers des Bechers besitzen und in einem axialen Abstand von etwa 0,5 bis 1,5 cm von der Wärmeplatte des Bechers angeordnet. Die Rippen dienen als Abstandshalter zwischen der metallischen Wärmeplatte und dem Behälter, in dem sich die zu erwärmende Substanz befindet. Bei den angegebenen Abmessungen der Rippen wird eine lokale Überhitzung des Behälters vermieden und ein gute Zirkulation des Wasserbades erreicht.

In einer bevorzugten Ausgestaltung ist der Wärmeleitbügel in einer axial in der Becherwand ausgebildeten Tasche eingesteckt, wobei die Dicke der dem Becherinneren zugewandten Seite der Tasche vorzugsweise 1 mm beträgt. Dadurch ist der metallische Wärmeleitbügel ausreichend isoliert, um den elektrischen Sicherheitsvorschriften Rechnung tragen zu können. Da der Wärmeleitbügel nicht mit dem Wasserbad direkt in Kontakt steht, sondern durch die 1 mm starke Kunststoffschicht wärmeisoliert ist, tritt die Erwärmung des Wärmeleitbügels gegenüber derjenigen des Wasserbads erst mit einer zeitlichen Verzögerung ein, was das Regelverhalten des Thermostatschalters verbessert.

Vorzugsweise ist das PTC-Element zwischen zwei als Elektroden dienenden Kontaktblechen angeordnet und die Wärmeplatte unter Zwischenschaltung einer Isolierfolie auf eines der Kontaktbleche aufgelegt. Dadurch erfolgt eine gute Wärmeübertragung mit geringen Verlusten.

In einer vorteilhaften Ausgestaltung werden die Kontaktbleche mittels eines am Gehäuse abgestützten Federbleches gegeneinander gedrückt und in innigem Kontakt mit der Wärmeplatte gehalten, wodurch sich ein noch besserer Wärmekontakt zwischen dem Heizelement und der Wärmeplatte ergibt.

In einer einfachen und stabilen Ausführung des Federbleches weist dieses zwei gegenüberliegende abgeknickte Längskanten auf, deren Endabschnitte in das Gehäuseunterteil eingeschnappt sind. Weiterhin weist der zwischen den Längskanten befindliche Bereich mehrere ausgebogene Federzungen auf, um einen Kontaktdruck zwischen den Kontaktblechen und dem PTC-Heizelement zu erzeugen.

Vorzugsweise besitzt der Thermostatschalter ein Bimetallfederelement, das mit dem Wärmeleitbügel verbunden und so angeordnet ist, daß der Abstand zwischen dem PTC-Heizelement und dem Bimetallfederelement etwa 2 cm beträgt. Der Thermostatschalter wird dadurch von dem Wärmeleitbügel mechanisch gehalten, wodurch sich zusätzliche Halteelemente dafür erübrigen. Der angegebene Abstand zwischen dem Bimetallfederelement und dem Heizelement bewirkt ein gutes Regelverhalten des Thermostatschalters.

In einer bevorzugten Ausgestaltung der Erfindung ist an der Außenseite des Bechers ein Temperaturmeßelement in Wärmekontakt mit der Becherwand angebracht. Durch die einwandige Ausbildung der Seitenwände des Bechers besteht die Möglichkeit, ein Temperaturmeßelement in engem Wärmekontakt mit der Becherwand anzubringen. Ein so angeordnetes Temperaturmeßelement zeigt bei geeigneter Abstimmung eine Temperatur an, die im wesentlichen der Temperatur der zu erwärmenden Substanz entspricht. Dadurch eröffnet sich dem Benutzer die Möglichkeit, eine ständige visuelle Kontrolle der erreichten Temperatur vorzunehmen.

Vorzugsweise ist das Temperaturmeßelement eine Temperaturmeßfarbenfolie, mit der die Temperaturverteilung eines Becherwandabschnitts anzeigbar ist. Bei dieser Ausbildung des Temperaturmeßelements ist eine noch genauere simulierte Messung der Temperatur der zu erwärmenden Substanz erreichbar.

In einer weiter verbesserten Ausführung ist ein Metallstreifen zwischen der Becherwand und dem Temperaturmeßelement angeordnet, wodurch eine sehr genaue Temperaturmessung erzielt wird.

Das Wesen der vorliegenden Erfindung wird noch deutlicher durch die Beschreibung eines bevorzugten Ausführungsbeispiels anhand der beigefügten Zeichnungen, welche zeigen:
Fig. 1 einen Längsschnitt durch das vollständige Gerät,
Fig. 2A einen Längsschnitt durch das Gehäuseoberteil und wesentliche Teile der elektrischen Heizung,
Fig. 2B eine Ansicht der gleichen Teile, wie sie in Fig. 2A gezeigt sind, wobei der Längsschnitt an einer gegenüber dem Schnitt der Fig. 2A um 90^{o} versetzten Stelle vorgenommen wurde,
Fig. 2C einen gegenüber dem in Fig. 2A gezeigten, um 45^{o} versetzten Längsschnitt,
Fig. 3A und 3B in einer Explosivdarstellung zwei um 90^{o} versetzte Seitenansichten des oberen Gehäuseteils und wesentliche Teile der Heizung im unmontierten Zustand, und
Fig. 4 und 5 eine Draufsicht und eine Seitenansicht auf das Becheroberteil in einer bevorzugten Ausgestaltung der Erfindung.

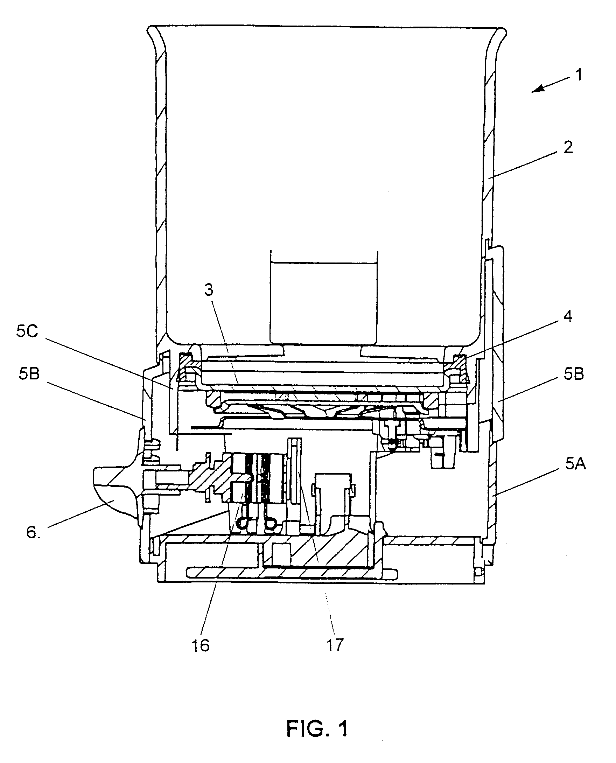

Bezugnehmend auf Fig. 1 umfaßt das erfindungsgemäße Wärmgerät einen Becher 1 mit Seitenwänden 2 aus Kunststoff und einer Bodenplatte 3 aus einem zur Wärmeübertragung geeigneten Metall, beispielsweise Aluminium mit eloxierter oder beschichteter Oberfläche. Die Bodenplatte 3 ist kreisförmig ausgebildet und weist an ihrem äußeren Rand eine abgebogene Umfangskante auf. Die Bodenplatte wird bei der Montage in entsprechend geformte Ausnehmungen in der seitlichen Becherwand eingesetzt. In den Ausnehmungen befindet sich eine kreisringförmige Silikondichtung 4, in die die Bodenplatte eingepreßt wird, woraus eine gute Abdichtung resultiert.

Von den seitlichen Becherwänden stehen drei Rippen radial nach innen gerichtet hervor. Der axiale Abstand der Rippen zur Bodenplatte 3 beträgt etwa 1 cm. Die Länge der Rippen beträgt in etwa ein Viertel des Durchmessers des Bechers 1.

Das Wärmgerät ist in einem dreiteiligen Gehäuse 5 aufgenommen, welches aus einem Gehäuseunterteil 5A, 5B und einem Gehäuseoberteil 5C besteht. Das Gehäuseoberteil umfaßt die Seitenwände 2 des Bechers und eine Aufnahme für die Wärmeplatte und die wesentlichen Teile der elektrischen Heizung. Das Gehäuseteil 5B ist im wesentlichen hohlzylinderförmig ausgebildet und besitzt an einer Seite eine kreisrunde Öffnung für einen Drehknopf 6. Der Drehknopf ist mit Schnappnasen versehen, welche im Gehäuse eingerastet sind, wodurch der Drehknopf im Gehäuse drehbar geführt ist. Schließlich umfaßt das Gehäuse 5 einen Boden 5A, der mit einer Kabelhalterung und einer Zugentlastung für eine Anschlußleitung versehen ist. Die drei Gehäuseteile sind so ausgeformt, daß sie bei der Montage aufeinandergesetzt werden können und mittels Rasthaken oder ähnlicher Verbindungen miteinander verbunden sind.

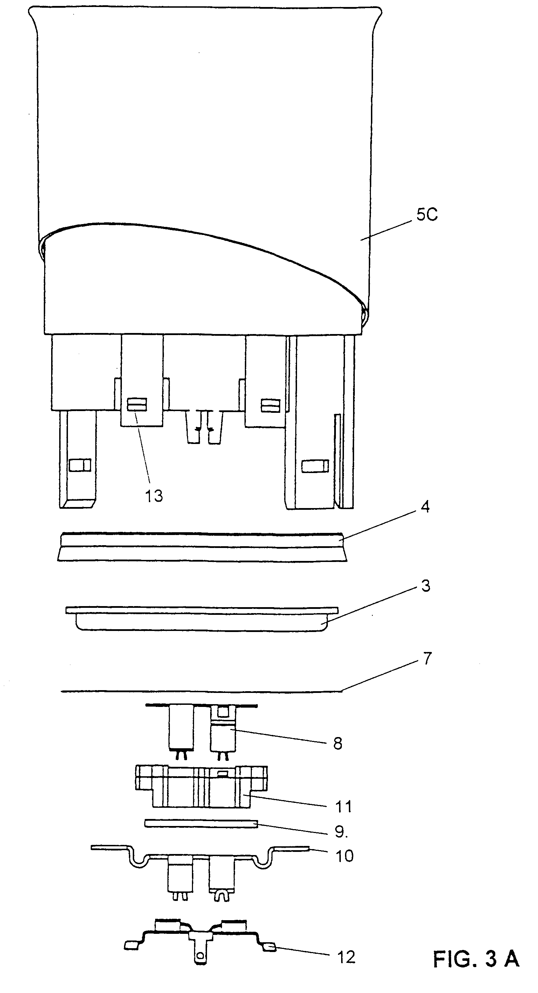

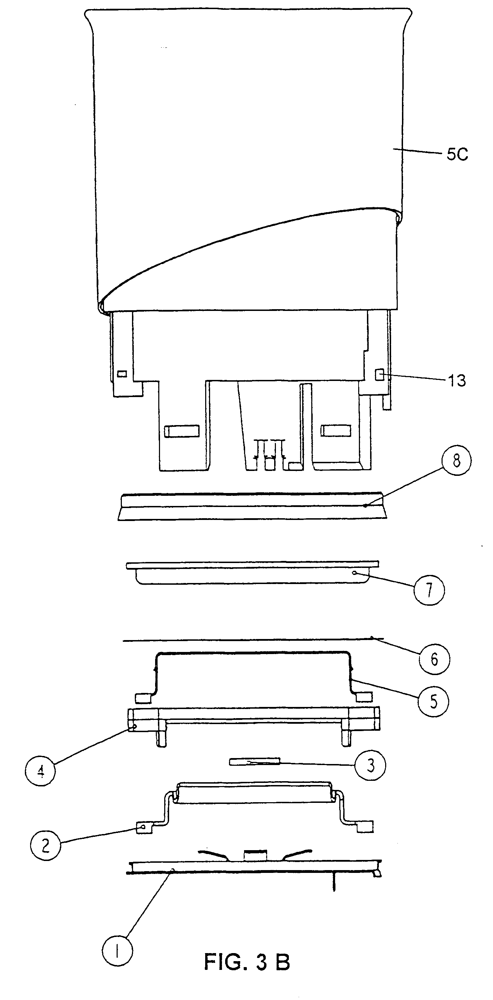

Bezugnehmend auf die Fig. 3A und 3B sollen nun die wesentlichen Teile der elektrischen Heizung erläutert werden. In den Figuren ist das Gehäuseoberteil 5C in zwei um 90^{o} versetzten Ansichten dargestellt. Unter dem Gehäuseoberteil ist die Silikondichtung 4 und die Bodenplatte 3 des Bechers dargestellt. Mit dem Bezugszeichen 7 ist eine dreifache dünne Isolierfolie aus Kapton gekennzeichnet, welche sich zwischen der metallischen Bodenplatte 3 und einer oberen Elektrode 8 befindet. Die Elektrode 8 ist ein Kontaktblech mit abgebogenen Enden, die Anschlußfahnen für Drahtlitzen tragen. Zwischen der obere Elektrode 8 und einer unteren Elektrode 10 befinden sich ein PTC-Element 9 sowie ein Kunststoffrahmen 11 zur Halterung des Elektrodenpaars und des dazwischen befindlichen PTC-Elements. Wie aus Fig. 3A am besten ersichtlich ist, umfaßt die untere Elektrode 10 einen zentralen ebenen Bereich, der auf der Unterseite des PTC-Elements flach aufliegt mit sich daran anschließenden gekrümmten Bereichen, an deren Enden zwei Auflageflächen ausgebildet sind. Die Auflageflächen sind unter Zwischenschaltung der Kaptan-Folie direkt auf die Bodenplatte 3 aufgelegt, wodurch die Wärmeübertragung von der unteren Elektrode auf die Bodenplatte verbessert wird. Die gekrümmten Abschnitte vergrößern den Anpreßdruck der Elektrode 10 auf das PTC-Element 9 in vorteilhafter Weise und sorgen für einen innigen Kontakt zwischen den Elektroden und dem PTC-Element.

Schließlich ist mit dem Bezugszeichen 12 ein Federblech gekennzeichnet, welches in das Gehäuseoberteil einsetzbar ist und in diesem Zustand die oben beschriebenen elektrischen Teile in engem Kontakt hält. Das Federblech 12 besitzt zwei stabilisierende abgeknickte Längskanten, deren Endabschnitte in geeignete Öffnungen 13 eingerastet sind.

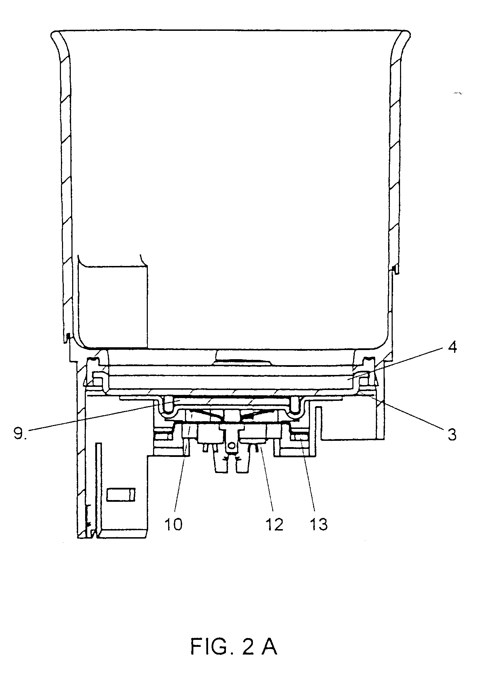

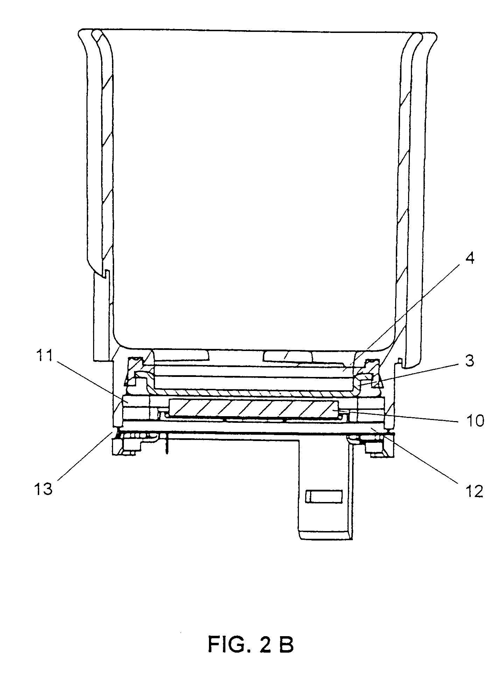

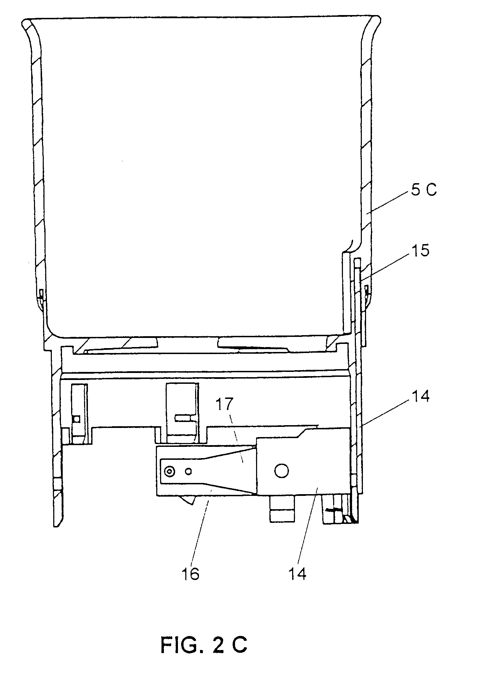

Die Ansichten der Fig. 2A und 2B entsprechen denjenigen der Fig. 3A bzw. 3B, wobei in den Fig. 2 die Heizung vollständig in dem Gehäuseoberteil montiert gezeigt ist, während bei der Explosivdarstellung der Fig. 3 die Teile der Übersichtlichkeit halber einzeln gezeigt sind.

Fig. 2C zeigt eine Ansicht, in der ein Wärmeleitbügel 14 erkennbar ist, der sich seitlich an der Außenwand des Gehäuseoberteils 5C erstreckt. Der Wärmeleitbügel ist mit seinem oberen Ende in einer axial in der Becherwand ausgebildeten Tasche 15 eingesteckt. An der Becherinnenseite befindet sich eine zusätzliche Kunststoffschicht einer Dicke von ca. 1 mm, welche dazu dient, den Wärmeübergang zwischen dem Wasserbad und dem Wärmeleitbügel 14 zu verzögern. Der Wärmeleitbügel 14 weist an seinem unteren Ende einen um ca. 90^{o} abgeknickten Verbindungsabschnitt auf, an dem ein Thermostatschalter 16 mit einem Bimetallfederelement 17 befestigt ist. Die Position des Thermostatschalters bezüglich des Heizelements wird in Fig. 1 verdeutlicht. Der Thermostatschalter befindet sich in einem Abstand von ca. 2 cm im direkten Einflußbereich des Heizelements.

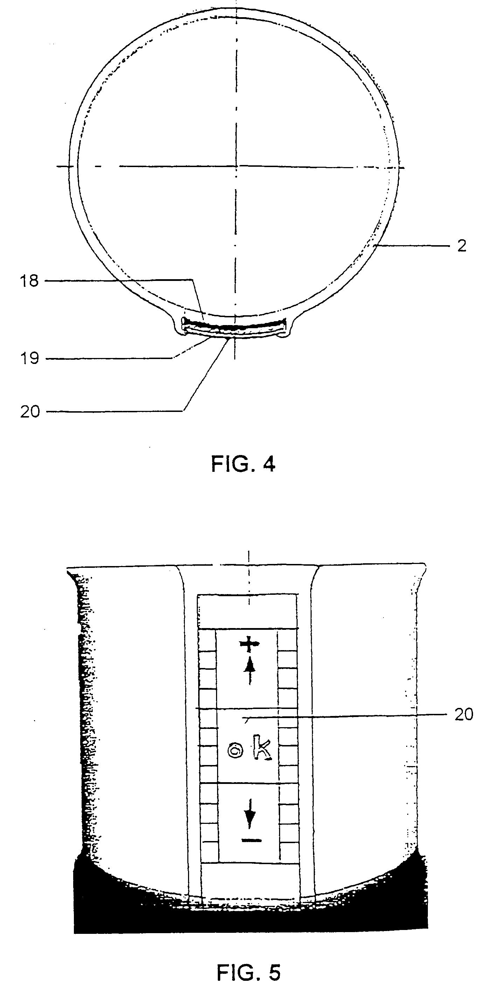

Fig. 4 und 5 zeigen eine Draufsicht bzw. Seitenansicht des Becheroberteils mit einer daran angebrachten Temperaturanzeige. Unmittelbar an der Becheraußenwand anliegend, erstreckt sich ein Metallstreifen 18, vorzugsweise aus Aluminium in senkrechter Richtung. Der Aluminiumstreifen ist in seiner Querrichtung leicht gebogen, wodurch er sich dem äußeren Krümmungsradius der Becherwand anpaßt. Da das Temperaturmeßelement an der Außenwandung des Bechers angebracht ist, befindet sich zwischen dem Element und dem Wasserbad eine Wärmeisolation, die eine Materialstärke von ca. 1 mm besitzt. Es ist jedoch hervorzuheben, daß auch ein anderer Wert für die Materialstärke der Kunststoffisolation gewählt werden kann, um eine geeignete Abstimmung der angezeigten Temperatur mit der tatsächlichen Temperatur der zu erwärmenden Substanz zu erhalten. Es kann also die Wandstärke des Bechers an dieser Stelle verringert oder vergrößert werden in Abhängigkeit von der Wärmeisolation des Behälters und der zu erwärmenden Substanz.

Auf den Metallstreifen ist ein LCD-Temperaturmeßfarbenanzeigeelement 19 flach aufgelegt, das an seiner Vorderseite mit einer bedruckbaren Folie oder einem Formteil 20 versehen ist. LCD-Temperaturmeßfarbenanzeigeelemente besitzen Temperaturmeßfarben (Thermofarben), die in Abhängigkeit von der Temperatur ihre Farbe wechseln. Mit ihnen kann man die Temperatur und die Temperaturverteilung auf größeren Flächen bestimmen. Der Metallstreifen, das Temperaturanzeigeelement und die bedruckbare Folie werden mittels in die Becherwand integrierter Haltenasen an der Becheraußenwand befestigt.

Nunmehr soll die Funktionsweise des erfindungsgemäßen Wärmgeräts erläutert werden.

Im Betrieb des Geräts wird ein Behälter mit der zu erwärmenden Substanz in den Becher eingesetzt, der auf den axial nach innen stehenden Rippen aufsitzt. Zu Beginn eines Erwärmungsvorgangs besitzt das Wasserbad, der Wärmeleitbügel 14 und das Bimetallfederelement 17 gewöhnlicherweise die Umgebungstemperatur. Der Bediener des Geräts stellt mit dem Drehknopf 6 eine über der Umgebungstemperatur liegende Endtemperatur am Thermostatschalter ein. Der Thermostatschalter stellt daraufhin eine elektrische Verbindung zwischen dem Heizelement und dem Anschlußleiter her, wodurch die Heizung eingeschaltet wird. Folglich erwärmt sich das PTC-Element auf eine bekannte Art und Weise. Die Leistungsaufnahme des Heizelements ist im kalten Zustand wesentlich höher, da der Widerstandswert des Heizelements mit zunehmender Temperatur stark ansteigt. Durch die Erwärmung des PTC-Heizelements erwärmen sich auch die damit unmittelbar in Kontakt stehenden Elektroden 8 und 10. Die Wärme wird an die Wärmeplatte 3 abgegeben und erwärmt das Wasserbad mit dem darin befindlichen Behälter und der zu erwärmenden Substanz.

Der Thermostatschalter 16 mit dem Bimetallfederelement 17 ist regelungstechnisch gesehen ein Zweipunktregler mit einer Schalthysterese, der einen oberen und unteren Schwellwert besitzt. Beim Erreichen des oberen Schwellwerts unterbricht der Thermostatschalter die elektrische Verbindung des Heizelements mit dem Anschlußleiter und wenn die Temperatur des Bimetallfederelements den unteren Grenzwert unterschreitet, wird die Verbindung wieder hergestellt.

Das Schaltverhalten des Thermostatschalters wird während der anfänglichen Aufheizphase im wesentlichen von der Temperatur des Wärmeleitbügels bestimmt. Anfänglich besitzt der Wärmeleitbügel die Umgebungstemperatur, da er sich erst allmählich mit dem Ansteigen der Temperatur des Wasserbads erwärmt. Zusätzlich sorgt die Kunststoffisolierung des Wärmeleitbügels im Bereich der Becherinnenseite dafür, daß die Erwärmung des Wärmeleitbügels zeitlich der Erwärmung des Wasserbads hinterherhinkt. Daher erhält der Thermostatschalter in dieser Phase von dem Wärmeleitbügel ein Temperatursignal, welches niedriger als die Temperatur des Wasserbades ist. Dem Regler wird also eine zu niedrige Temperatur "vorgetäuscht". Die zu diesem Zeitpunkt von der unteren Elektrode 10 und dem mit ihr in Verbindung stehenden Federblech 12 abgestrahlte Wärme reicht nicht aus, den Thermostatschalter auszuschalten, da dieser über den Wärmeleitbügel zu diesem Zeitpunkt noch ein niedriges Temperatursignal empfängt. Daher schaltet der Thermostatschalter nicht aus und das Heizelement heizt weiter, wodurch im Wasserbad sogar eine Temperatur erzeugt werden kann, welche über der gewünschten Endtemperatur liegt. Dieses "Überschwingen" der Wasserbadtemperatur führt zu einer sehr schnellen Aufheizung.

Nach einer gewissen Zeitdauer mit eingeschalteter Heizung hat sich der Wärmeleitbügel auf eine Temperatur nahe der gewünschten Endtemperatur erwärmt. Da sich das Bimetallfederelement zusätzlich im direkten Einflußbereich des PTC-Heizelements befindet, überlagert sich der Temperatureinfluß des Wärmeleitbügels und die direkte Wärmestrahlung, wodurch das Bimetallfederelement den oberen Grenzwert erreicht. Folglich unterbricht der Zweipunktregler die elektrische Verbindung zu dem PTC-Heizelement, wodurch auch die direkte Wärmestrahlung sehr schnell verschwindet. Daher sinkt die Temperatur des Bimetallfederelements relativ rasch ab, bis der untere Grenzwert unterschritten wird, was zu einem erneuten Einschalten der Heizung führt. Dieser Ein- und Ausschaltvorgang tritt häufig auf, da die direkte Wärmestrahlung mit geringer zeitlicher Verzögerung Einfluß auf den Regler nimmt. Das häufige Ein- und Ausschalten ist ein sichtbares Zeichen dafür, daß die erreichte Endtemperatur in engen Temperaturgrenzen gehalten wird.

Wie oben beschrieben, wird das Schaltverhalten des Thermostatschalters während der anfänglichen Aufheizphase im wesentlichen von der Temperatur des Wärmeleitbügels bestimmt, wogegen nach dem Erreichen der Endtemperatur die direkte Wärmestrahlung des PTC-Heizelements für das Erreichen des oberen und unteren Grenzwerts des Zweipunktreglers verantwortlich ist. Es bedarf daher einer guten Abstimmung dieser beiden Einflußgrößen untereinander mit anderen Worten es muß eine geeignete Gewichtung gefunden werden, mit der die beiden Istwert-Temperatursignale dem Regler zugeführt werden. Die Gewichtung kann beispielsweise durch den Abstand des Thermostatschalters vom Heizelement, die Materialstärke des Wärmeleitbügels, die Oberfläche des Bimetallelements und dessen Ausrichtung in bezug auf das PTC-Heizelement und schließlich die Wärmekopplung zwischen dem Wärmeleitbügel und dem Thermostatschalter variiert werden.

Im hier beschriebenen Ausführungsbeispiel wird eine geeignete Abstimmung dadurch erreicht, daß der Abstand zwischen Thermostatschalter und Heizelement etwa 2 cm beträgt, das Bimetallfederelement eine Oberfläche von ca. 2 cm² besitzt und senkrecht zur unteren Elektrode angeordnet ist, die Materialstärke des Wärmeleitbügels 1,5 mm beträgt und die Wärmekopplung zwischen dem Wärmeleitbügel und dem Bimetallfederelement auf einer Überlapplungsfläche von 1 cm² erfolgt.

Darüber hinaus muß auch das Zeitverhalten der beiden Temperatursensoren geeignet eingestellt werden, damit die Überlagerung der Istwertsignale das gewünschte Regelverhalten erzeugt. Wie oben erwähnt, ist es wichtig, einen schnell ansprechenden Temperatursensor und einen Sensor mit relativ trägem Ansprechverhalten miteinander zu koppeln, wobei der träge Sensor das Schaltverhalten während der Aufwärmphase bestimmt und der schnelle Sensor das Schalten des Reglers bei Erreichen der Endtemperatur.

Es ist für den Fachmann klar, daß bei dem Ausführungsbeispiel die Wärmeleitfähigkeit, die Übergangswiderstände (insbesondere die Kunststoffisolation an der Becherinnenseite) Parameter sind, welche das zeitliche Temperaturverhalten des Wärmeleitbügels beeinflussen. Beim schnellen Sensor spielt das verwendete PTC-Heizelement (Endtemperatur, Leistung, Anzahl und Anordnung der Elemente) eine wesentliche Rolle.

Daher ist zu betonen, daß die oben beschriebenen Parameter nicht als Absolutwerte angesehen werden sollen, sondern das Wesen der Erfindung in einer geeigneten Abstimmung der physikalischen Größen liegt, mit der das beschriebene Schaltverhalten des Reglers erreicht wird.

Einen wesentlichen Vorteil im Betrieb des erfindungsgemäßen Wärmgeräts stellt das Bereitstellen einer Temperaturanzeige dar, die im wesentlichen die Temperatur der zu erwärmenden Substanz anzeigt. Wie oben beschrieben, läuft die Temperatur der zu erwärmenden Substanz derjenigen des Wasserbads zeitlich hinterher, da erst die Wärmeisolierung des Behälters für die zu erwärmende Substanz überwunden werden muß. Ebenso steigt die Temperatur an der Außenwand des Bechers auch erst nach einer gewissen Zeitdauer an, welche erforderlich ist, um die Becherwand aufzuwärmen. Das zeitliche Verhalten der Temperatur an der Außenwand des Bechers entspricht bei geeigneter Dimensionierung der Materialstärke der Becherwand im wesentlichen der Temperatur der zu erwärmenden Substanz.

Aufgrund der thermischen Wärmekonvektion ist die Temperatur des Wasserbads in den oberen Schichten höher als diejenige der unteren Wasserschichten. Daher kommt es zu einer ungleichmäßigen Temperaturverteilung an der Außenwand des Bechers, d.h. mit zunehmender Entfernung von der Becherbodenplatte nimmt auch die Temperatur der Außenwand zu. Der an der Außenwand angebrachte Metallstreifen 18 aus Aluminium sorgt für einen raschen Ausgleich des Temperaturgradienten. Das Temperaturanzeigeelement mißt daher eine über die Oberfläche des Metallstreifens vergleichmäßigte Temperatur.

Es ist klar, daß die Temperaturanzeige dem Benutzer des Wärmgeräts verschiedene Vorteile bietet. Zum Beispiel kann er, wenn er eine sehr schnelle Aufheizung wünscht, eine sehr hohe Endtemperatur einstellen und den Erwärmungsvorgang durch Entnehmen des Behälters abbrechen, wenn die Anzeige die gewünschte Temperatur erreicht. Weiterhin wird die gewünschte Temperatur noch genauer erreicht, wenn der Benutzer nach dem Erreichen der Endtemperatur das unvermeidliche Schwanken der Endtemperatur innerhalb der Toleranzgrenzen mittels einer optischen Anzeige überwacht und zu einem bestimmten Zeitpunkt den Behälter mit der zu erwärmenden Substanz dem Gerät entnimmt.

## Patentansprüche

1. Elektrisch heizbares Wärmgerät zum Erwärmen von in einem Behälter befindlichen Substanzen, mit einem als Wasserbad dienenden Becher (1), in den der Behälter einsetzbar ist, vorzugsweise Babykostwärmer, mit einer elektrischen Heizung, die ein Heizelement (9) und einen Thermostatschalter (16) aufweist, wobei der Boden des Bechers (1) als eine metallische Wärmeplatte (3) ausgebildet ist, und das Heizelement aus wenigstens einem PTC-Element (9) besteht, welches unmittelbar unter der Wärmeplatte (3) angeordnet ist, **dadurch gekennzeichnet,** daß ein Wärmeleitbügel (14) seitlich an der Becherwand (2) angeordnet und mit dem Thermostatschalter (16) verbunden ist, und daß der Thermostatschalter an einer Stelle nahe dem Heizelement (9) angeordnet ist, an der er sich im direkten Einflußbereich des Heizelementes befindet.

2. Wärmgerät nach Anspruch 1, **dadurch gekennzeichnet,** daß das Gerät ein Kunststoffgehäuse (5) aufweist, dessen Oberteil (5C) die seitlichen Wände (2) des Bechers (1) bildet.

3. Wärmgerät nach Anspruch 1 oder 2, **dadurch gekennzeichnet,** daß an den seitlichen Wänden (2) des Bechers (1) radial nach innen vorstehende Rippen ausgebildet sind, die eine Länge von vorzugsweise einem Viertel des Durchmessers des Bechers (1) besitzen und die in einem axialen Abstand von etwa 0,5 bis 1,5 cm von der Wärmeplatte (3) des Bechers angeordnet sind.

4. Wärmgerät nach wenigstens einem der Ansprüche 1 bis 3, **dadurch gekennzeichnet**, daß der Wärmeleitbügel (14) in einer axial in der Becherwand ausgebildeten Tasche (15) eingesteckt ist und daß die Dicke der dem Becherinneren zugewandte Seite der Tasche vorzugsweise 1 mm beträgt.

5. Wärmgerät nach wenigstens einem der Ansprüche 1 bis 4, **dadurch gekennzeichnet**, daß das PTC-Element (9) zwischen zwei als Elektroden dienenden Kontaktblechen (8, 10) angeordnet ist und daß die Wärmeplatte (3) unter Zwischenschaltung einer Isolierfolie (7) auf eines der Kontaktbleche (8) aufgelegt ist.

6. Wärmgerät nach Anspruch 5, **dadurch gekennzeichnet**, daß das Gerät ein am Gehäuse (5) abgestütztes Federblech (12) aufweist, das eine Federkraft erzeugt, welche die Kontaktbleche (8, 10) gegeneinander drückt und in innigem Kontakt mit der Wärmeplatte (3) hält.

7. Wärmgerät nach Anspruch 6, **dadurch gekennzeichnet**, daß das Federblech (12) zwei sich gegenüberliegende abgeknickte Längskanten aufweist, deren Endabschnitte in das Gehäuseoberteil (5C) eingeschnappt sind und daß der zwischen den Längskanten befindliche Bereich mehrere ausgebogene Federzungen aufweist.

8. Wärmgerät nach wenigstens einem der Ansprüche 1 bis 7, **dadurch gekennzeichnet**, daß der Thermostatschalter (16) ein Bimetallfederelement (17) aufweist, das mit dem Wärmeleitbügel (14) verbunden ist und daß der Abstand zwischen dem PTC-Heizelement (9) und dem Bimetallfederelement (17) vorzugsweise 2 cm beträgt.

9. Wärmgerät nach wenigstens Anspruch 2, **dadurch gekennzeichnet,** daß an der Außenseite des Bechers (1) ein Temperaturmeßelement in Wärmekontakt mit der Becherwand (2) angebracht ist.

10. Wärmgerät nach Anspruch 9, **dadurch gekennzeichnet**, daß das Temperaturmeßelement eine Temperaturmeßfarbenfolie (19) ist, mit der die Temperaturverteilung eines Abschnitts der Becheraußenwand anzeigbar ist.

11. Wärmgerät nach Anspruch 9 oder 10, **dadurch gekennzeichnet**, daß ein Metallstreifen (18) zwischen der Becherwand (2) und dem Temperaturmeßelement (19) angeordnet ist.

## Claims

1. An electrically heatable warming device for heating substances located in a receptacle, with a beaker (1) acting as a water bath, into which the receptacle can be inserted, preferably a baby food warmer, with an electrical heater, which comprises a heating element (9) and a thermostat switch (16), the base of the beaker (1) being constructed as a metallic heating plate (3) and the heating element being formed by at least one PTC element (9), which is arranged directly beneath the heating plate (3), characterised in that a heat conductor bracket (14) is arranged laterally on the beaker wall (2) and is connected to the thermostat switch (16), and the thermostat switch is arranged at a location near the heating element (9) where it lies in the direct area of influence of the heating element.

2. A warming device according to claim 1, characterised in that the device comprises a plastics material housing (5), whose upper section (5C) forms the lateral walls (2) of the beaker (1).

3. A warming device according to claim 1 or 2, characterised in that radially inwardly projecting ribs are formed on the lateral walls (2) of the beaker (1), said ribs having a length of preferably one quarter the diameter of the beaker (1) and being arranged at an axial distance of approximately 0.5 to 1.5 cm from the heating plate (3) of the beaker.

4. A warming device according to at least one of claims 1 to 3, characterised in that the heat conductor bracket (14) is inserted into a pocket (15) formed axially in the beaker wall and the thickness of the side of the pocket facing the beaker interior is preferably 1 mm.

5. A warming device according to at least one of claims 1 to 4, characterised in that the PTC element (9) is arranged between two contact plates (8, 10) acting as electrodes and the heating plate (3) is arranged on top of a contact plate (8) with the interposition of an insulating film (7).

6. A warming device according to claim 5, characterised in that the device comprises a spring plate (12) which is supported on the housing (5) and generates a spring force, which forces the contact plates (8, 10) towards one another and holds them in intimate contact with the heating plate (3).

7. A warming device according to claim 6, characterised in that the spring plate (12) comprises two oppositely disposed angled longitudinal edges, whose end sections are clipped into the housing upper section (5C), and the region lying between the longitudinal edges comprises a plurality of outwardly bent spring tongues.

8. A warming device according to at least one of claims 1 to 7, characterised in that the thermostat switch (16) comprises a bimetallic spring element (17), which is connected to the heat conductor bracket (14), and the distance between the PTC heating element (9) and the bimetallic spring element (17) is preferably 2 cm.

9. A warming device according to at least claim 2, characterised in that a temperature measuring element is fitted on the outside of the beaker (1) in thermal contact with the beaker wall (2).

10. A warming device according to claim 9, characterised in that the temperature measuring element is a temperature measuring colour film (19), by means of which the temperature distribution of a section of the beaker outer wall can be indicated.

11. A warming device according to claim 9 or 10, characterised in that a metallic strip (18) is arranged between the beaker wall (2) and the temperature measuring element (19).

## Revendications

1. Dispositif de réchauffage à électricité pour réchauffer des substances se trouvant dans un récipient, à l'aide d'un godet (1) faisant fonction de bain-marie, dans lequel le récipient peut être mis en place, de préférence réchauffeur d'aliments pour bébés, comprenant un chauffage électrique qui comporte un élément chauffant (9) et un interrupteur thermostatique (16), le fond du godet (1) étant réalisé sous la forme d'une plaque chauffante métallique (3) et l'élément chauffant étant constitué par au moins un élément à coefficient de température positif (9), qui est disposé directement sous la plaque chauffante (3), caractérisé en ce qu'un arceau conducteur de la chaleur (14) est disposé sur le côté de la paroi (2) du godet et est relié à l'interrupteur thermostatique (16), et en ce que l'interrupteur thermostatique est disposé en un emplacement proche de l'élément chauffant (9), où il se trouve dans la zone d'influence directe de l'élément chauffant.

2. Dispositif de réchauffage selon la revendication 1, caractérisé en ce que l'appareil comporte un bâti en matière plastique (5), dont la partie supérieure (5C) constitue la paroi latérale (2) du godet (1).

3. Dispositif de réchauffage selon la revendication 1 ou 2, caractérisé en ce que, sur les parois latérales (2) du godet (1), sont formées des nervures saillant radialement vers l'intérieur, qui possèdent une longueur représentant, de préférence, un quart du diamètre du godet (1) et qui sont disposées à une distance axiale d'environ 0,5 à 1,5 cm de la plaque chauffante (3) du godet.

4. Dispositif de réchauffage selon au moins l'une des revendications 1 à 3, caractérisé en ce que l'arceau conducteur de la chaleur (14) est encastré dans une poche (15) formée, en direction axiale, dans la paroi du godet et en ce que l'épaisseur du côté de la poche tourné vers l'intérieur du godet est, de préférence, de 1 mm.

5. Dispositif de réchauffage selon au moins l'une des revendications 1 à 4, caractérisé en ce que l'élément à coefficient de température positif (9) est disposé entre deux lames de contact (8, 10) faisant fonction d'électrodes et en ce que la plaque chauffante (3) est posée sur l'une des lames de contact (8) avec interposition d'une feuille d'isolant (7).

6. Dispositif de rechauffage selon la revendication 5, caractérisé en ce que l'appareil comporte une lame de ressort (12) qui s'appuie sur le bâti (5) et qui produit une force élastique, qui repousse les lames de contact (8, 10) l'une vers l'autre et les maintient en contact intime avec la plaque chauffante (3).

7. Dispositif de réchauffage selon la revendication 6, caractérisé en ce que la lame de ressort (12) comporte deux bords longitudinaux repliés l'un en face de l'autre, dont les parties d'extrémité sont encliquetées dans la partie supérieure (5C) du bâti, et en ce que la région se trouvant entre les bords longitudinaux comporte plusieurs languettes élastiques recourbées.

8. Dispositif de réchauffage selon au moins l'une des revendications 1 à 7, caractérisé en ce que l'interrupteur thermostatique (16) comporte un élément formant ressort bilame (17), qui est relié à l'arceau conducteur de la chaleur (14), et en ce que la distance entre l'élément chauffant à coefficient de température positif (9) et l'élément formant ressort bilame (17) est, de préférence, de 2 cm.

9. Dispositif de réchauffage selon au moins la revendication 2, caractérisé en ce que, sur la face extérieure du godet (1), est appliqué un élément de mesure de température en contact thermique avec la paroi (2) du godet.

10. Dispositif de réchauffage selon la revendication 9, caractérisé en ce que l'élément de mesure de température est une pellicule de mesure de température à coloration (19), à l'aide de laquelle la distribution de température dans une partie de la paroi extérieure du godet peut être visualisée.

11. Dispositif de réchauffage selon la revendication 9 ou 10, caractérisé en ce qu'une bande métallique (18) est disposée entre la paroi (2) du godet et l'élément de mesure de température (19).
